# EUROPÄISCHE PATENTANMELDUNG

(11) **EP 1 905 572 A1**
(43) Veröffentlichungstag der Anmeldung: **02.04.2008**
(21) Anmeldenummer: 06020552.3
(22) Anmeldetag: 29.09.2006
(51) Int. Cl.: B29C 70/32, B29C 70/42, B29C 70/46, B29C 70/20

(54) **Verfahren zur Herstellung von ringförmigen Strukturen aus Faserverbundthermoplasten**

(71) Anmelder: ETH Zürich, 8092 Zürich (CH)
(72) Erfinder: Pini, Niccolò, 8046 Zürich (CH); Zaugg, Niklaus, 8956 Kilwangen (CH)
(74) Vertreter: Kley, Hansjörg

(57) **Zusammenfassung**

Eine ringförmigen Struktur (18) wird aus einem bandförmigen Halbzeug aus Faserverbundthermoplast wie folgt hergestellt:;
A das Halbzeug wird - zu einem Ring (18.1) geformt - in einer ein ringförmiges Aussenwerkzeug (11) und ein ringförmiges Innenwerkzeug (10) aufweisenden Vorrichtung in einem radialen Bereich (13) des Ringes (18.1) aufgeheizt;
B der aufgeheizte Bereich des Ringes (18.1) wird rotierend einem durch das Innen- und Aussenwerkzeug (10, 11) gebildetem Drucksegment (14) zugeführt;
C der aufgeheizte Bereich des Rings (18.1) wird zwischen dem Innen- und dem Aussenwerkzeug unter Druck im Drucksegment (14) gewalzt;
D noch im Drucksegment (14) befindlich wird der gewalzte Bereich des Ringes in einer Kühlzone (15) abgekühlt.

Auf diese weise ist ein Verfahren geschaffen mit dem hochfeste und nahtlose ringförmige Strukturen wie z.B. Radfelgen (18) hergestellt werden können.

## Beschreibung

Die vorliegende Erfindung betrifft ein Verfahren zur Herstellung von ringförmigen Strukturen aus Faserverbundthermoplasten gemäss dem Oberbegriff des Patentanspruchs 1.

In der Automobilindustrie ist ein steter Bedarf an Rädern und Felgen, die leicht sind und ein günstiges Bruchverhalten mit einer hohen Steifigkeit und Festigkeit kombinieren. Dazu bietet sich an, die vorgenannten Räder bzw. Felgen aus einem Faserverbundwerkstoff herzustellen.

Aus der Schrift DE 101 45 630 A1 [1] ist ein Rad aus Faserverbundwerkstoff bekannt, bei dem der grösste Anteil der Endlosfaserstränge in der Felge in Umfangsrichtung und in den Speichen in radialer Richtung liegt. Dies wird in der Herstellung durch Wickeln erreicht. Es ist unmittelbar einsichtig, dass dieses Herstellungsverfahren bei Verwendung einer Thermoplastmatrix ziemlich aufwendig ist.

Die Herstellung eines gebogenen Profil-Formteils aus faserverstärkten Thermoplastwerkstoff wird in der Schrift DE 43 35 062 A1 [2] wie folgt vorgeschlagen:
Ein faserverstärkter Thermoplastwerkstoff aus einem Prepreg wird einem bestimmten Druck und erhöhter Temperatur in einem formgebenden Werkzeug unterzogen. Das entstehende Profil-Formteil wird nach dem Formvorgang gekühlt. Anschliessend wird der Prepreg gleitend in einen Spalt zwischen zwei im wesentlichen feststehenden Werkzeugteilen eingeschoben. Dabei wird der Prepreg einer weiteren Druckbeanspruchung unterzogen, die aus der Einwirkung der Werkzeugteile resultiert. Dadurch nimmt das Profil-Formteil im wesentlichen den Querschnitt des Spaltes und die Krümmung des gebogenen Werkzeugteils an. Prepreg steht dabei für die englische Kurzform für «preimpregnated fibres» (zu deutsch: «vorimprägnierte Fasern»). Dieses Verfahren ermöglicht die Herstellung von nahtlosen Profilen offensichtlich nicht.
Nahtlose metallische Felgen als solche sind bekannt, beispielsweise ist in GB 2 010 155 A [3] ein Verfahren zu deren Herstellung offenbart, das als Ausgangsbasis bereits eine metallische Ringstruktur verwendet. Durch Druck/Drehung zwischen zwei profilierten kreisförmigen Formwerkzeugen wird diesem Halbzeug ein vorgegebenes Profil «aufgeprägt». Die beschriebene Methode ist ohne weiteres jedoch für Faserverbundthermoplasten nicht anwendbar, weil die Anwesenheit von Endlosfasern die Umformmechanismen hindert, die bei Metallen wirksam sind.

Im Kontext dieser Schrift wird der Begriff «ringförmige Struktur» für Räder und dergleichen verwendet. Unter «ringförmiger Struktur» ist auch ein Kegelstumpf (also ohne Deckflächen) subsummiert. Genau genommen umfasst der vorgenannte Begriff alle topologisch einem Ring äquivalenten, im wesentlichen rotationssymmetrischen Formen.

Der vorliegenden Erfindung liegt daher die Aufgabe zugrunde, Verfahren zur Herstellung von ringförmigen Strukturen aus Faserverbundthermoplasten anzugeben, die nahtlos sind. Das Verfahren soll dabei einfach sein und die weiteren vorgenannten Einschränkungen überwinden.

Diese Aufgabe wird gelöst mit einem Verfahren gemäss den im Patentanspruch 1 angegebenen Verfahrensschritten.

Das erfindungsgemässe Verfahren mit den Verfahrensschritten
- A: das Halbzeug wird - zu einem Ring geformt - in einer ein ringförmiges Aussenwerkzeug und ein ringförmiges Innenwerkzeug aufweisenden Vorrichtung aufgeheizt;
- B: der aufgeheizte Bereich des Ringes wird rotierend einem durch das Innen- und Aussenwerkzeug gebildetem Drucksegment zugeführt;
- C: der aufgeheizte Bereich des Rings wird zwischen dem Innen- und dem Aussenwerkzeug unter Druck im Drucksegment gewalzt;
- D: noch im Drucksegment befindlich wird der gewalzte

Bereich des Ringes in einer Kühlzone abgekühlt; ermöglicht eine Vielzahl von konkreten Ausführungsformen, wie
- die Art des Aufheizens zu Beginn,
- die Art der Formung des Ringes,
- die Art des Antriebes von Innen- und Aussenform,
- die relative Drehung von Innen- und Aussenform,
- die Ausgestaltung der Druck- und Abkühlzone.

Das erfindungsgemässe Verfahren liefert deshalb nahtlose ringförmige Strukturen, weil die sich überlappenden Halbzeugteile während des Prozesses verschmelzen, sodass beim entformten Bauteil die Halbzeugübergänge nicht mehr bestehen. Bei einer Belastung des Bauteils findet in den Überschneidungszonen durch Scherkräfte in der Matrix eine Kraftübertragung von den Fasern des einen Halbzeugteiles auf die Fasern des anderen statt, sodass sich die Strukturschwächung anders als bei abrupten Kraftflussumlenkungen, wie sie beispielsweise in Schweissnähten und Klebeflächen auftreten, in engen Grenzen hält.

Weitere vorteilhafte Ausgestaltungen der Erfindung sind in weiteren Ansprüchen angegeben.

Die Erfindung wird nachfolgend anhand der Zeichnung beispielsweise näher erläutert. Dabei zeigen:
- Figur 1: Prinzipdarstellung des erfindungsgemässen Verfahrens mit einem Innen- und Aussenwerkzeug und den verschiedenen Zonen für die Herstellung;
- Figur 2: Prinzipdarstellung des Verfahrens mit einem rotierendem Innen- und Aussenwerkzeug mit fixen Zentren;
- Figur 3: Prinzipdarstellung des Verfahrens mit einem rotierendem Innen- und Aussenwerkzeug mit fixem Zentrum des Aussenwerkzeuges;
- Figur 4: Prinzipdarstellung des Verfahrens mit einem rotierendem Innen- und Aussenwerkzeug mit fixem Zentrum des Innenwerkzeuges;
- Figur 5: Ausbildung des Innenwerkzeugs als Raupenband;
- Figur 6: Schnittdarstellung durch Innen und Aussenwerkzeug zur Erzielung eines bestimmten Querschnittes der herzustellenden ringförmigen Struktur.

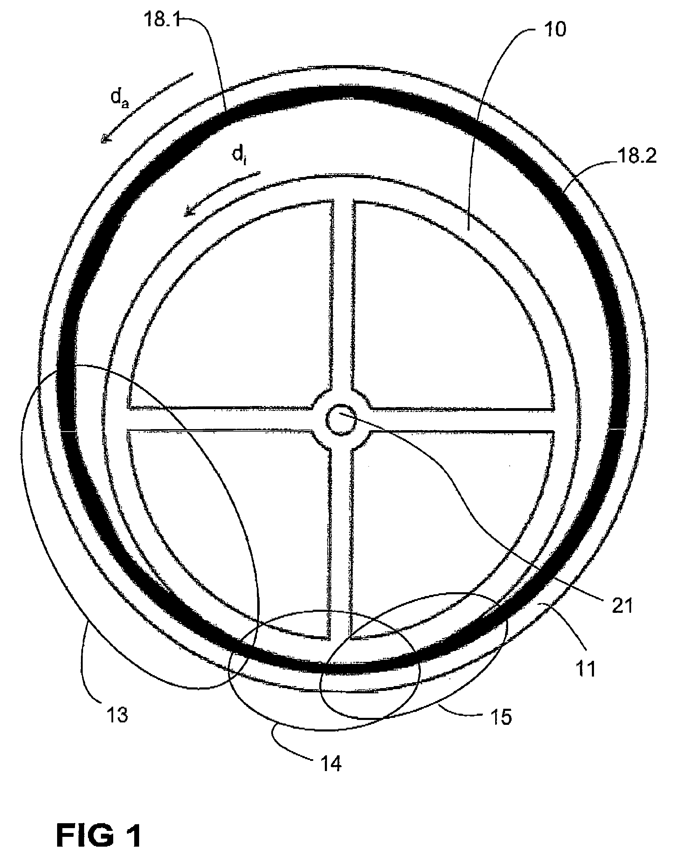

Das Prinzip des erfindungsgemässen Verfahrens ist in der Figur 1 dargestellt. Die Vorrichtung zur Durchführung des Verfahrens enthält im wesentlichen je ein rotierendes Innenwerkzeug 10 und ein entsprechend rotierendes Aussenwerkzeug 11. Entsprechend rotierend heisst: ohne eine relative Drehbewegung zwischen diesen Werkzeugen, also ohne Schlupf. Ein Ring 18 wird aus einem flächigen Halbzeug geformt und in die Vorrichtung mit dem vorgenannten Innen- und Aussenwerkzug gebracht. Dieser lose Ring 18.1 wird in einer Heizzone erwärmt und durch Rotation gemäss den Richtungen dₐ / dᵢ des Innen- /Aussenwerkzeugs 10/11 einer Druckzone 14 zugeführt. Teilweise überlappend mit der Druckzone 14 wird der gewalzte Ring 18.2 durch eine Kühlzone 15 geführt. Nachdem der ganze «lose» Ring 18.1 diesen Prozess erfahren hat, ist die Herstellung des Ringes 18 damit beendet. Das verwendete Halbzeug ist beispielsweise eine mit Glasfasern unidirektional verstärkte Polypropylenmatrix. Das Halbzeug liegt in Bandform vor und misst in der Breite 50mm und in der Dicke 0.5mm. Dieses Material wird von der Firma Gurit (www.qurit.com) unter der Handelsbezeichnung «Plytron» vertrieben. Je nach Anwendung sind auch andere Abmessungen erforderlich. Ebenso sind auch andere Halbzeuge möglich, z.B. unterschiedliche Faser/Matrix Kombinationen oder vorimprägnierte, nicht konsolidierte Faserhalbzeuge oder nicht imprägnierte Halbzeuge kombiniert mit Filmen aus reinem Polymer.

Das Einbringen des Ringes kann manuell oder automatisiert erfolgen, für das Herstellungsverfahren selber ist das Einbringen von untergeordneter Bedeutung. Das automatisierte Einbringen kann mit einem Roboter vorgenommen werden.

Der Ring 18.1 kann auf verschiedene Weise geformt werden:
i) Das bandförmige Halbzeug wird in Streifen geschnitten. Durch Aneinanderreihen der Streifen wird ein Ring 18.1 geformt. Die Streifen können dabei bündig oder überlappend oder mehrschichtig zum Ring 18.1 geformt werden.
ii) Der Ring 18.1 wird durch Aufwickeln des bandförmigen Halbzeuges ähnlich einer Spirale geformt.
iii) Alternativ kann der Ring 18.1 sukzessive in der Aussenform 11 durch Einlegen von Streifen geformt werden. Dies kann automatisiert oder manuell vorgenommen werden.
iv) Die Formung gemäss ii) kann mit wie folgt vorbearbeitetem Halbzeug vorgenommen werden: Das Halbzeug wird mit Einschnitten versehen, ohne sie jedoch vollständig zu trennen. Die genannten Einschnitte dienen primär zur Durchtrennung von im Halbzeug befindlichen Verstärkungsfasern und können in regelmässigem Abstand beispielsweise versetzt zu einander angeordnet werden. Diese Einschnitte erleichtern ein Fasergleiten während des Umformprozesses und verringern dadurch die Eigenspannungen im Bauteil, was eine hohe Masshaltigkeit begünstigt.
v) Ebenso kann das in Streifen geschnittene Halbzeug vor dem Schneiden oder nach dem Schneiden in Streifen zusätzlich dem in iv) beschriebenen Einschneiden unterzogen werden.

Die Temperaturführung ist entscheidend für das Funktionieren des Prozesses. Der verwendete Thermoplastwerkstoff bestimmt die relevanten Prozesstemperaturen, es sind dies bei teilkristallinen Thermoplasten die Kristallitschmelztemperatur Tₛ, z.B. 162°, sowie die Kristallisationstemperatur Tₖ, welche je nach Thermoplast mehr als 40° C tiefer liegen kann als die Kristallitschmelztemperatur. Der Ring 18.1 muss in der Heizzone 13 mindestens auf Kristallitschmelztemperatur Tₛ aufgeheizt werden. Dies kann direkt durch Kontaktheizung, z.B. durch Heizbänder oder -manschetten, oder durch Wärmestrahlung, z.B. Infrarotstrahler, oder durch Heissluftkonvektion geschehen oder indirekt über das Erhitzen der Formwerkzeuge 10, 11 oder durch eine Kombination der genannten Methoden erfolgen. Die Anordnung der Heizquellen soll so gewählt werden, dass der Ring 18.1 möglichst schnell über den gesamten Querschnitt eine Temperatur grösser als Tₛ erreicht. Das bedeutet, dass die eingelegten Bänder aus dem Halbzeug von beiden Seiten her erhitzt werden: also zum einen direkt von innen her erhitzt und zum anderen indirekt über ein Erwärmen des Aussenwerkzeuges 11 von aussen her erhitzt. Es kann ein Segment des Ringes 18.1 oder zunächst das gesamte in der Aussenform eingelegte Halbzeug aufgeheizt und aufgeschmolzen werden. Im Fall der Erhitzung des ganzen Ringes 18.1 wird anschliessend dann das durch den Walzvorgang gewalzte Teil des Ringes 18.2 der Kühlung unterzogen. Die in den Figuren dargestellten Heizzone 13 und Kühlzone 15 haben somit eine Ausdehnung gemäss dem jeweiligen Stand des Herstellungsverfahrens.

Im Fall von amorphen Thermoplasten gibt es keine ausgeprägte Temperaturgrenzen, ausser die sogenannte Glasumwandlungstemperatur T_{g}: Die Verarbeitungstemperatur muss oberhalb von T_{g} sein, meistens auch 100°C höher, deswegen nimmt T_{g} nicht dieselbe Bedeutung an, wie Tₛ im Fall der teilkristallinen Polymeren. Analog, gibt es keine Kristallisationstemperatur bei amorphen Thermoplasten (weil sie amorph bleiben). Für die Erstarrung ist dann die Erstarrungstemperatur massgebend. Erstarrungstemperatur und Verarbeitungstemperatur haben keine festen Grenzen und können sich von Verfahren zu Verfahren für dasselbe Material ändern. Das Prinzip der Verarbeitung bleibt allerdings für amorphe und teilkristalline Thermoplaste gleich: Nur die Definition und Bezeichnung der Grenztemperaturen ändert sich.

Noch während des Formvorganges in der Druckzone 14 muss in einer Kühlzone 15 mit einer leistungsfähigen Kühleinrichtung mit der Abkühlung des Ringes 18.2 begonnen werden, so dass die Kristallisationstemperatur Tₛ noch vor dem Verlassen des Umformbereiches 14 erreicht wird. Es ist unumgänglich, den Ring 18.2 noch unter Druck bis unter Tₖ abzukühlen, da sonst wegen des starken Erstarrungs- und Temperaturschwundes von teilkristallinen Thermoplasten die geforderte Masshaltigkeit und Oberflächengüte des Bauteils nicht erreicht werden können. Die Kühlung, welche sich in einer beschränkten Kühlzone 15 um den Umformbereich 14 abspielt, muss im Gegensatz zur Heizung, welche über eine längere Strecke geschehen kann, zwangsläufig über die Werkzeuge 10 und 11 bewerkstelligt werden. Eine Luftkühlung ist in diesem Fall nicht ausreichend, es muss vom Aussenwerkzeug 11 und vom Innenwerkzeug 12 her mit Wasser oder mit einem anderen Kühlmedium wie z.B. CO₂ gekühlt werden.

Innenwerkzeug 10 und Aussenwerkzeug 11 können wie folgt angetrieben werden:
i) Antrieb des Innenwerkzeuges 10, Aussenwerkzeug 11 mitdrehend;
ii) Antrieb des Aussenwerkzeuges 11, Innenwerkzeug 10 mitdrehend;
iii) Antrieb von Innenwerkzeug 10 und Aussenwerkzeug 11.

Ein synchroner Antrieb von Innenwerkzeug 10 und Aussenwerkzeug 11 gemäss vorstehender Ziffer iii) kann durch zwei separate Antriebe oder durch einen Antrieb mit Verteilgetriebe oder durch eine gegenseitige Verzahnung der beiden Werkzeuge 10, 11 realisiert werden. Ein Elektromotor ist kühlwassergeschützt in einem gewissen Abstand von den Werkzeugen 10,11 anzuordnen.

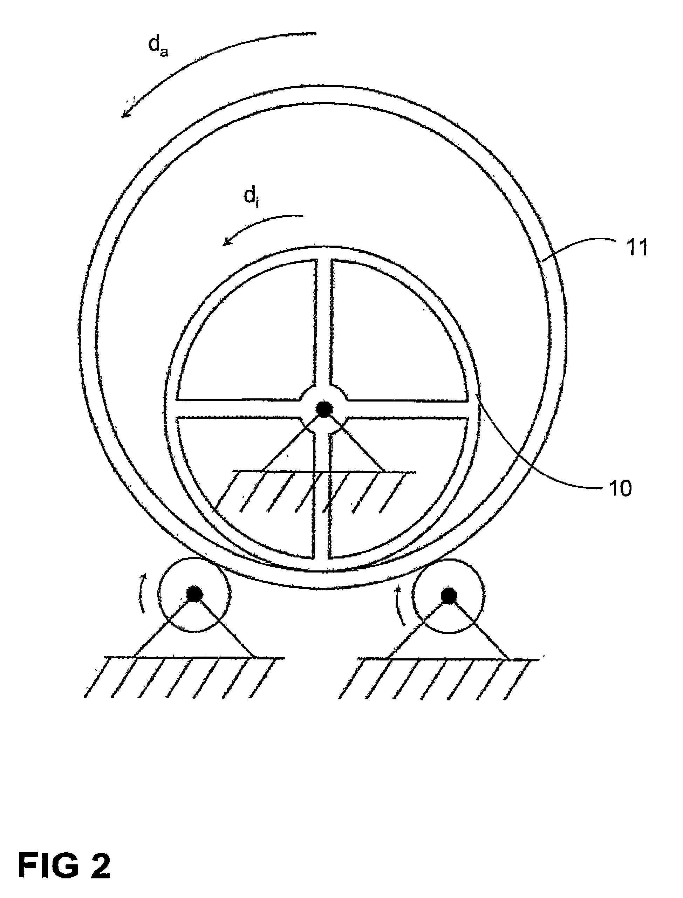

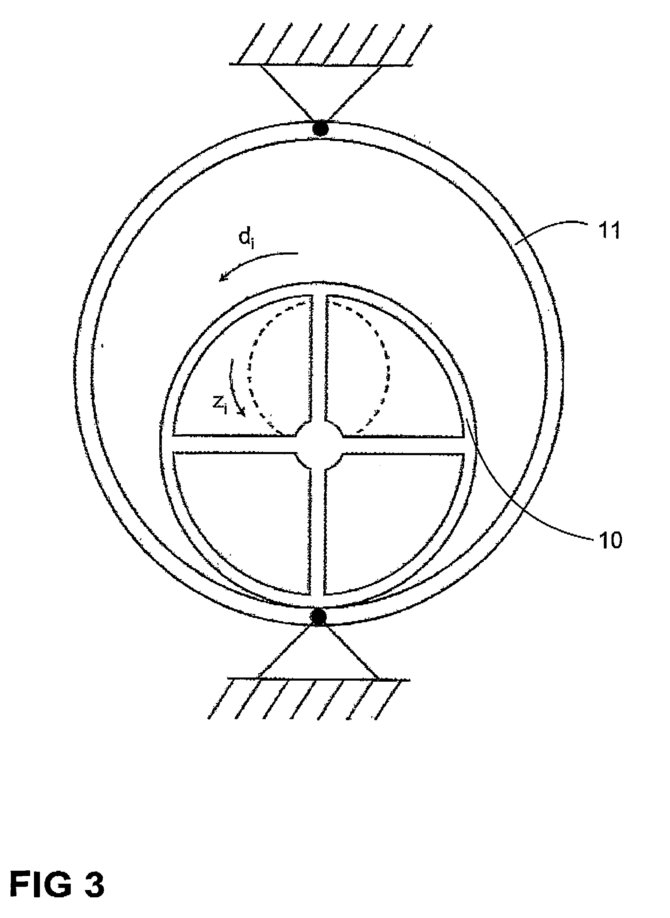

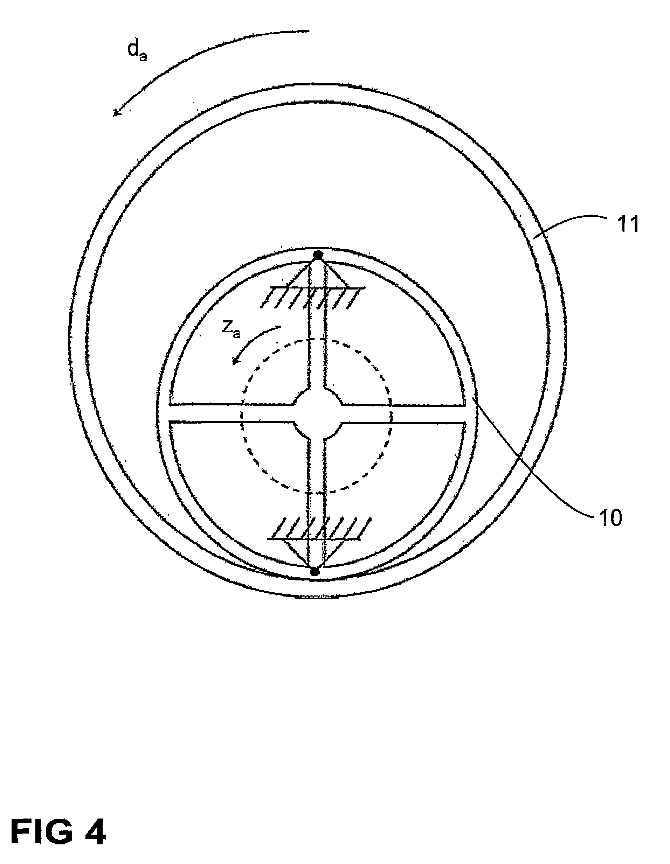

Die Rotation selber der Werkzeuge 10, 11 kann gemäss der prinzipiellen Darstellung in den Figuren 2 bis 4 vorgesehen werden; aus Einfachheitsgründen wurde dabei die ringförmige Struktur 18.1/18.2 weggelassen:
i) Gemäss Figur 2 sind die Rotationszentren der Innen-/Aussenwerkzeuge 10, 11 ortsfest.
ii) In der Anordnung gemäss der Figur 3 ist das Zentrum des Aussenwerkzeugs 10 fix, während das Innenwerkzeug 11 auf der Innenfläche des Aussenwerkzeuges 12 abrollt. Selbstverständlich ist zwischen Innen- und Aussenwerkzeug 10,11 der Ring 18.1 bzw. 18.2. Dementsprechend müssen auch die Kühl- und Heizzonen 13,15 sich rotatorisch bewegen.
iii) In der Anordnung gemäss der Figur 4 ist das Zentrum des Innenwerkzeugs 11 fix und das Aussenwerkzeug 10 rollt um das Innenwerkzeug. Auch hier ist selbstverständlich dazwischen der Ring 18.1/18.2. Ebenso ist hier eine rotatorische Bewegung der Kühl- und Heizzonen 13, 15 erforderlich.

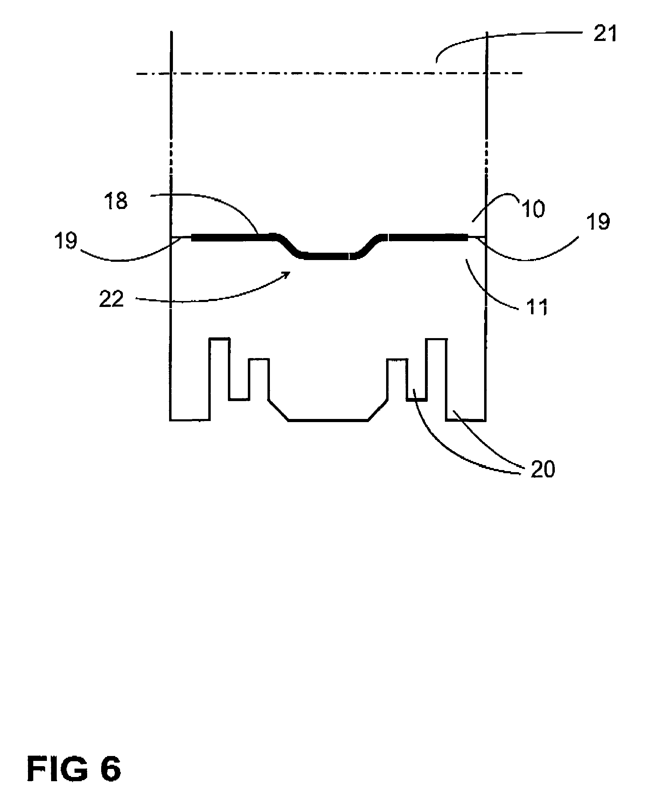

In der Figur 6 ist ein Querschnitt durch Innen-/Aussenwerkzeug 10, 11 mit einer Form bzw. Profil 22 des herzustellenden Ringes 18 gezeigt. Am Rand des Innen-/Aussenwerkzeuges 10, 11 kann ein Spalt 19 vorgesehen werden, um ggf. durch das Walzen/Pressen resultierende überflüssiges Material austreten zu lassen. Dieser Spalt 19 ist jedoch keineswegs erforderlich, je nach Anwendung kann er die Masshaltigkeit auch ungünstig beeinflussen. Dieser Spalt 19 bedingt die Abwesenheit eines Kontaktes zwischen Innen- 10 und Aussenform 11. Dies muss jedoch nicht unbedingt der Fall sein: Die Werkzeuge können in einer gewissen Entfernung vom Spalt eine Kontaktfläche aufweisen, wodurch einerseits der Materialaustritt durch den Spalt statt finden kann und andererseits auch die Masshaltigkeit gewährleistet ist.

Um die auf diese Weise hergestellte Ringstruktur 18 aus der Aussenform 11 zu entnehmen, muss die Aussenform 11 zerlegbar ausgestaltet sein. Diese erforderliche Zerlegbarkeit ist unmittelbar aus der vorstehend genannten Figur 6 ersichtlich. Die Konstruktion der konkaven Aussenform muss so gestaltet werden, dass das hergestellte Profil 22, welches exakt die Abmessungen der Aussenformkonturen aufweist, entformt werden kann. Dazu ist das Aussenwerkzeug 11 in drei 120°-Segmente zu unterteilen. Diese 120°-Segmente werden z.B. mit einfachen Stiftschrauben zusammengeflanscht. Je nach herzustellender ringförmiger Struktur kann alternativ auch eine Zerlegung in zwei Segmente zu 180° vorgesehen werden. Denkbar sind auch mehr Segmente und Segmente unterschiedlicher Grösse (z.B. 1x160° und 2x100°); dies vor allem bei einem automatisierten Entformungsmechanismus.

Stark in die Formkonstruktion mit einbezogen werden muss auf der einen Seite die angestrebte Temperaturführung, welche eine schnelle Abkühlung der Werkzeuge 10, 11 im Umformbereich 14 ermöglichen soll. Auf der anderen Seite muss es jedoch auch möglich sein, im Umformbereich 14 einen Druck in der Grössenordnung von 10bar aufzubauen ohne dabei eine grosse Werkzeugverformung oder sogar einen Werkzeugbruch zu riskieren. Es stehen sich hier also das Verlangen nach einer möglichst geringen thermischen Masse der Werkzeuge 10, 11 und eine den beträchtlichen Lastfällen genügende Dimensionierung gegenüber. Wie in Figur 6 dargestellt, kann durch Kühlrippen 20 eine erhebliche Verbesserung der Kühlung erreicht werden ohne deswegen eine relevante Verschlechterung der Steifigkeit des Aussenwerkzeugs 11 in Kauf nehmen zu müssen.

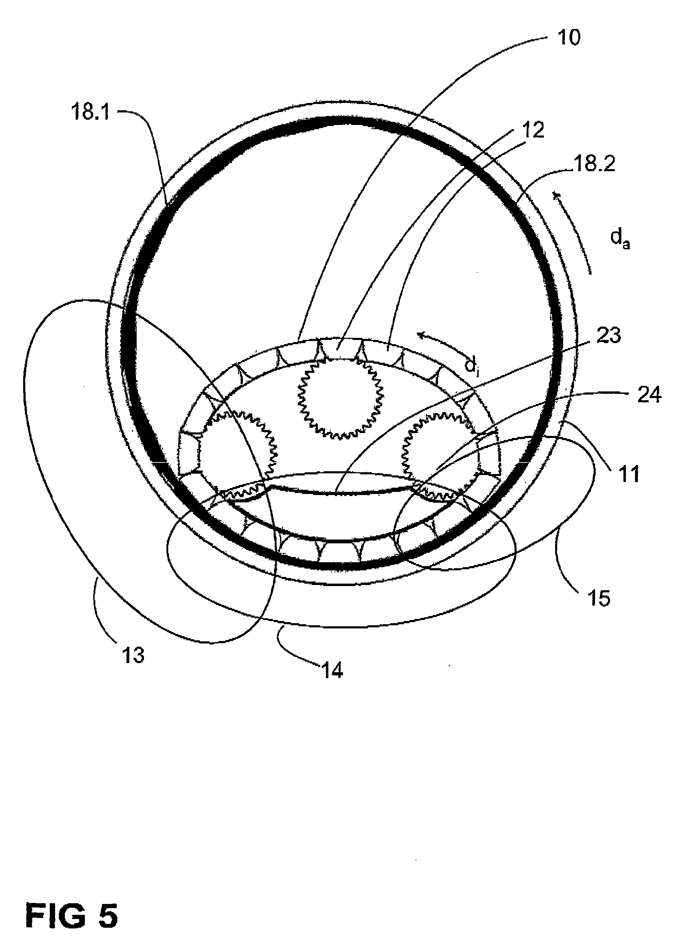

Wie eingangs erwähnt ist eine räumliche Ausdehnung der Druckzone 14 von grossem Vorteil. Dazu wird anhand der Figur 5 folgende weitere besonders vorteilhafte Ausgestaltung des erfindungsgemässen Herstellungsverfahrens erläutert: Das Innenwerkzeug 11 wird als eine Raupe mit Raupengliedern 12 ausgestaltet. Der Antrieb der Raupe erfolgt über mehrere Zahnräder 23. Eine Raupenführung 24 im Bereich der Druckzone 14 sorgt dafür, dass die Raupenglieder 12 den erforderlichen Druck auf die herzustellende ringförmige Struktur ausüben können. Dabei wird der Druck durch eine Kraft auf das ganze Raupensystem aufgebaut. Die Kontur der Raupenführung 24 wird weniger durch den gewünschten Druck im Umformbereich bestimmt als viel mehr durch die Raupenglieder, welche bei einer starken Umlenkung zu weit ausschwenken und mit dem Bauteil kollidieren würden.

**Liste der verwendeten Bezugszeichen und Symbole, Glossar**
- 10: Innenwerkzeug; Innenform, Raupe
- 11: Aussenwerkzeug; Aussenform
- 12: Raupenglieder als Teil des Innenwerkzeugs
- 13: Heizzone
- 14: Druckzone; Drucksegment; Umformbereich
- 15: Kühlzone
- 16: Bewegungskurve des Zentrums des Aussenwerkzeugs
- 17: Bewegungskurve des Zentrums des Innenwerkzeugs
- 18: Ring; Ringförmige Struktur
- 18.1: Ring vor der Walzung
- 18.2: Ring nach der Walzung/thermischen Behandlung
- 19: Spalt um überflüssiges Material austreten zu lassen
- 20: Kühlrippe des Aussenwerkzeugs
- 21: Drehachse des Innenwerkzeugs
- 22: Form, Querschnitt des herzustellenden Ringes; Profil
- 23: Zahnrad
- 24: Raupenführung
- dᵢ: Drehrichtung des Innenwerkzeugs
- dₐ: Drehrichtung des Aussenwerkzeugs
- T_{g}: Glasumwandlungstemperatur
- Tₖ: Kristallisationstemperatur
- Tₛ: Kristallitschmelztemperatur
- Zₐ: Bewegungskurve des Zentrums des Aussenwerkzeugs
- Zᵢ: Bewegungskurve des Zentrums des Innenwerkzeugs

### Literaturliste

[1] DE 101 45 630 A1
   «Gebautes Rad aus Faserverbundwerkstoff»
   Bayerische Motoren werke AG, 80809 München, DE
   Offenlegungstag: 30.04.2003.
[2] DE 43 35 062 A1
   «Verfahren zur Herstellung eines Profil-Formteils aus faserverstärktem Thermoplastwerkstoff»
   HMS Antriebssysteme GmbH, 10785 Berlin, DE.
   Offenlegungstag: 13.04.1995.
[3] GB 2 010 155 A
   «A method of manufactoring seamless wheel rims»
   Honda Giken Kgyo Kabushiki Kaisha
   Tokyo Japan
   Offenlegungsdatum: 27.06.1979

## Patentansprüche

1. Verfahren zur Herstellung einer ringförmigen Struktur (18) aus einem flächigen Halbzeug aus Faserverbundthermoplast;
**gekennzeichnet durch** die Verfahrensschritte,
A das Halbzeug wird - zu einem Ring (18.1) geformt - in einer ein ringförmiges Aussenwerkzeug (11) und ein ringförmiges Innenwerkzeug (10) aufweisenden Vorrichtung aufgeheizt;
B der aufgeheizte Bereich des Ringes (18.1) wird rotierend einem **durch** das Innen- und Aussenwerkzeug (10, 11) gebildeten Drucksegment (14) zugeführt;
C der aufgeheizte Bereich des Rings (18.1) wird zwischen dem Innen- und dem Aussenwerkzeug unter Druck im Drucksegment (14) gewalzt;
D noch im Drucksegment (14) befindlich wird der gewalzte Bereich des Ringes in einer Kühlzone (15) abgekühlt.

2. Verfahren nach Anspruch 1
**dadurch gekennzeichnet, dass**
vor Ausführung des Verfahrensschrittes A das Halbzeug aus einer Mehrzahl flächiger Stücke vorliegt und der Ring (18.1) durch sukzessives Einlegen der flächigen Stücke geformt wird.

3. Verfahren nach Anspruch 2,
**dadurch gekennzeichnet, dass**
das sukzessive Einlegen durch einen Roboter automatisiert erfolgt.

4. Verfahren nach einem der Ansprüche 1 bis 3,
**dadurch gekennzeichnet, dass**
vor Ausführung des Verfahrensschrittes A das Halbzeug als Band vorliegt, in Streifen geschnitten wird und durch Aneinanderreihen der Streifen ein Ring (18.1) geformt wird.

5. Verfahren nach Anspruch 1,
**dadurch gekennzeichnet, dass**
vor Ausführung des verfahrensschrittes A der Ring (18.1) durch Aufwickeln eines bandförmigen Halbzeuges geformt wird.

6. Verfahren nach Anspruch 1,
**dadurch gekennzeichnet, dass**
vor Ausführung des Verfahrensschrittes A das Halbzeug mit Einschnitten versehen wird ohne das Halbzeug vollständig in Stücke zu trennen um im Halbzeug vorhandene Verstärkungsfasern zu durchtrennen

7. Verfahren nach Anspruch 2 oder 3,
**dadurch gekennzeichnet, dass**
vor Ausführung des Verfahrensschrittes A die flächigen Stücke mit Einschnitten versehen werden, ohne die flächigen Stücke vollständig in weitere Stücke zu trennen um in den flächigen Stücken vorhandene verstärkungsfasern zu durchtrennen.

8. Verfahren nach einem der Ansprüche 1 bis 7,
**dadurch gekennzeichnet, dass**
im Verfahrensschritt A ein Segment (13) des zum Ring (18.1) geformten Halbzeuges (18.1) aufgeheizt wird.

9. Verfahren nach einem der Ansprüche 1 bis 7,
**dadurch gekennzeichnet, dass**
im Verfahrensschritt A der ganze Ring (18.1) aufgeheizt wird.

10. Verfahren nach einem der Ansprüche 1 bis 9,
**dadurch gekennzeichnet, dass**
das Innenwerkzeug (10) durch eine mehrere Raupengliedern (12) aufweisende Raupenkette (10) gebildet wird, um ein grösseres Drucksegment (14) zu erzielen.

11. Verfahren nach Anspruch 10,
**dadurch gekennzeichnet, dass**
die Raupenkette (10) im Bereich des Drucksegmentes (14) eine Raupenführung (24) aufweist, damit die Raupenglieder einen Druck auf das Halbzeug (18) im Drucksegment (14) ausüben können.

12. Verfahren nach einem der Ansprüche 1 bis 9,
**dadurch gekennzeichnet, dass**
das Zentrum des Innenwerkzeuges (10) fest ist und dass sich das Aussenwerkzeug (11) um das Innenwerkzeug (10) dreht.

13. Verfahren nach einem der Ansprüche 1 bis 9,
**dadurch gekennzeichnet, dass**
das Zentrum des Aussenwerkzeuges (11) fest ist und dass sich das Innenwerkzeug (10) innerhalb des Aussenwerkzeuges (11) dreht.
